# EUROPEAN PATENT APPLICATION

(11) **EP 3 778 536 A1**
(43) Date of publication of application: **17.02.2021**
(21) Application number: 19191270.8
(22) Date of filing: 12.08.2019
(51) Int. Cl.: C05C 9/00, C05G 3/90, C05D 5/00, C05D 9/02

(54) **IMPROVED UREA-BASED COMPOSITION AND METHOD FOR THE MANUFACTURE THEREOF**

(71) Applicant: Yara International ASA, 0277 Oslo (NO)
(72) Inventor: COLPAERT, Filip, B-9052 Zwijnaarde (BE); VAN BELZEN, Ruud, 4331 CA Middelburg (NL)
(74) Representative: De Clercq & Partners

(57) **Abstract**

The invention relates to a solid, particulate, homogeneous urea-based composition comprising urea in particulate form and a urease inhibitor of the type phosphoric triamide, in particular N-(n-butyl) thiophosphoric triamide (nBTPT), wherein the urea-based composition is further characterized in that it comprises a magnesium sulfate. The composition according to the invention has been stabilized against the degradation of a urease inhibitor of the type phosphoric triamide, in particular N-(n-butyl) thiophosphoric triamide (nBTPT) in the presence of urea. The invention further relates to a method for the manufacture of the claimed solid, particulate, homogeneous urea-based composition.

## Description

### Field of the invention

This invention relates to a homogeneous, solid, particulate, urea-based composition, further comprising a urease inhibitor of the type phosphoric triamide, in particular N-(n-butyl) thiophosphoric triamide (nBTPT), which improved properties for reducing ammonia loss by urease activity in the soil. The invention further relates to a method for the manufacture of a homogeneous, solid, particulate urea-based composition comprising urea and a urease inhibitor of the type phosphoric triamide, in particular N-(n-butyl) thiophosphoric triamide (nBTPT). The product is in particular suitable as a fertilizer.

### Background of the invention

Urea is the most common nitrogen-containing fertilizer. Urea has the highest nitrogen content of all nitrogen-containing fertilizers in common use (46 %). Its consumption worldwide has been considerably increased, from about 20 million tons in the early seventies to about 100 million tons at the beginning of the twenty first century. Nitrogen is the basic constituent for any living system as a constituent of protein.

Unfortunately, nitrogen contained in urea cannot be assimilated directly by the plants and needs to be converted through hydrolysis into ammonium and nitrification into nitrate. Urea is first hydrolysed in the soil under the action of an enzyme, commonly called urease, to produce ammonia and carbon dioxide. Ureases are found in numerous bacteria, fungi, algae, plants and some invertebrates, as well as in soils, as a soil enzyme. Urea hydrolysis tends to increase the pH of its environment as the ammonia is dissolved into the water in the soil, and part of the ammonia can also be released into the atmosphere, a process called ammonia volatilization, thus becoming unavailable for the plant. About 50 weight% of nitrogen can sometimes be lost as a result of the volatilization of ammonia, all depending on the soil type, water content, pH, climate conditions, etc.

The availability of nitrogen, originating from urea, to the root system of plants can be improved by combining a urea-containing fertilizer (i.e. by incorporation or addition) with a urease inhibitor. Urease inhibitors are compounds that are capable of temporarily reducing the activity of the enzyme and slow down the rate at which urea is hydrolysed, avoiding peaks of ammonia concentration, allowing the plants to absorb the ammonium or nitrate ions as they are produced and therefore limiting the losses to the air. There are many compounds that can inhibit urease, but only a few that are non-toxic, effective at low concentrations, chemically stable enough and able to be combined with urea-containing fertilizers.

Among the most effective urease inhibitors known today are the phosphoric triamide compounds, first disclosed in US 4,530,714 (Allied Corporation, 1985).

An example of an effective urease inhibitor, disclosed in said patent is N-(n-butyl) thiophosphoric triamide, which will be referred to herein as nBTPT. This compound is actually the precursor for the active compound N-(n-butyl) phosphoric triamide (nBPT), obtained through oxidation of the thio-compound, but it is the thio-compound that is commonly produced, sold and used. Throughout this application, when referring to urease inhibitors of the type phosphoric triamide, it is understood that this comprises all active compounds, active precursors and active conversion products, resulting from said phosphoric triamides.

When combined with a urea-containing fertilizer, phosphoric triamide compounds reduce the rate at which urea is hydrolysed to ammonia in the soil. The benefits that are realized as a result of the delayed urea hydrolysis include the following: (1) nutrient nitrogen is available to the plant over a longer period of time, (2) excessive build-up of ammonia in the soil following the application of the urea-containing fertilizer is avoided, (3) the potential for nitrogen loss through ammonia volatilization is reduced, (4) the potential for damage by high levels of ammonia to seedlings and young plants is reduced, (5) plant uptake of nitrogen is increased, and (6) an increase in crop yields is attained. While phosphoric triamide compounds do not directly influence the rate of ammonium nitrification, they do control the levels of ammonium which are subject to the nitrification process and thereby indirectly controls the levels of nitrate nitrogen in the soil.

Although urease inhibitors of the type phosphoric triamide are generally disclosed for use with said urea-based fertilizers, it has been shown, for example in WO2018162533 (Yara, 2018), that the inhibitors are not very stable upon prolonged storage. Moreover, even a urease inhibitor of the type phosphoric triamide in an alkaline organic solvent, such as a mixture of propylene glycol and N-methyl-pyrrolidine, stabilised to allow for long storage time of the solution, is degraded over a prolonged period of time once applied onto a urea-based composition comprising particulate urea. The problem is most relevant for the storage of said urea-based composition, where the urea in particulate form and the urease inhibitor of the type phosphoric triamide are in intimate contact with one another for a prolonged period of time.

WO2018162533 discloses the addition of an alkaline or alkaline-forming compound such as calcium oxide, calcium carbonate and magnesium oxide, to compositions comprising urea and a urease inhibitor of the type phosphoric triamide to increase the stability of the inhibitor upon storage.

### Summary of the invention

Surprisingly, it was found that preparing a solid, particulate, homogeneous urea-based composition urea, a urease inhibitor of the type phosphoric triamide, in particular nBTPT, and a magnesium sulfate increases the stability of the inhibitor and do not generate significant ammonia emissions.

In one aspect, this document discloses a solid, particulate, homogeneous urea-based composition comprising urea, a urease inhibitor of the type phosphoric triamide, in particular nBTPT, and a magnesium sulfate.

In another aspect, the use of the solid, particulate, homogeneous urea-based composition as a fertilizer is disclosed.

In another aspect, the use of the solid, particulate, homogeneous urea-based composition as an animal feed is disclosed.

In another aspect, a method for the manufacture of a solid, particulate, urea-based composition is disclosed. The method comprises the steps of: providing a urea-based melt, adding to the melt, a urease inhibitor of the type phosphoric triamide in solid particulate or liquid form, in particular wherein the urease inhibitor is N-(n-butyl) thiophosphoric triamide (nBTPT), and a magnesium sulfate, mixing the melt comprising urea, the inhibitor and the magnesium sulfate to obtain an homogeneous melt, particulating the melt to obtain a solid, particulate, homogeneous urea-based composition, optionally, applying a coating to the urea-based composition, wherein the coating is able to increase at least the anticaking and/or water repellence and/or anti-dust properties of the urea-based composition.

In another aspect, a method for improving the stability of a urease inhibitor of the type phosphoric triamide, in particular N-(n-butyl) thiophosphoric triamide, (nBTPT) in a solid, particulate, homogeneous urea-based composition comprising urea and a urease inhibitor of the type phosphoric triamide is disclosed. The method comprises the step of adding a magnesium sulfate to the urea-based composition.

### Brief description of the figures

Figure 1 shows the amount (in percentage) of nBTPT recovered after 110 weeks of storage at room temperature of two products: **A** contains urea and nBTPT; **B** contains urea, nBTPT and MgSO₄.
Figure 2 shows the amount (in percentage) of nBTPT recovered after 25 days of storage of two products: **A** contains urea and nBTPT; **B** contains urea, nBTPT and MgSO₄.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.
Surprisingly, it was found that preparing a solid, particulate, homogeneous urea-based composition urea, a urease inhibitor of the type phosphoric triamide, in particular nBTPT, and a magnesium sulfate increased the stability of the inhibitor and did not generate ammonia emissions.

In one aspect, this document discloses a solid, particulate, homogeneous urea-based composition comprising urea, a urease inhibitor of the type phosphoric triamide, in particular nBTPT, and a magnesium sulfate.

By integrating the stabilizer, the magnesium sulfate, into the urea-based composition comprising a urease inhibitor of the type phosphoric triamide, the stability of the urease inhibitor of the type phosphoric triamide is greatly improved, especially during storage, such that lower amounts of said urease inhibitor may be used.

It may be an advantage to use homogeneous urea-based fertilizer particles comprising a urease inhibitor as opposed to fertilizers coated with the inhibitor, as the inhibitor is released at the same relative rate as the nutrients in the homogeneous composition. In a coated product, the inhibitor is released first and may lose its efficiency, be decomposed or washed away before the urea is completely released in the soil.

In one embodiment, the average particle size (dp50) of the composition is between 1.0 mm and 5 cm, as determined by mesh sieve screening. The particulate composition should have a minimum average particle size of 1.0 mm, so that it may be distributed by conventional means in agricultural fields. It should not be too big as well, as this may prevent the composition from being used with conventional spreading means.

### Urease Inhibitor

In one embodiment, the urease inhibitor of the type phosphoric triamide is a compound of formula I: 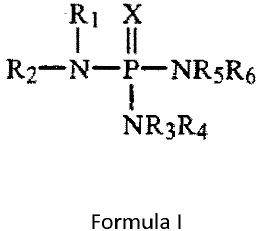 wherein:
- X is oxygen or sulphur;
- R₁ is alkyl, cycloalkenyl, aralkyl, aryl, alkenyl, alkynyl, or cycloalkyl;
- R₂ is hydrogen, alkyl, cycloalkenyl, aralkyl, aryl, alkenyl, alkynyl, or cycloalkyl, or R₁ and R₂ together may form an alkylene or alkenylene chain which may optionally include one or more heteroatoms of divalent oxygen, nitrogen or sulphur completing a 4, 5, 6, 7, or 8 membered ring system; and
- R₃, R₄, R₅ and R₆ are individually hydrogen or alkyl having 1 to 6 carbon atoms.

The terms alkyl, cycloalkenyl, aralkyl, aryl, alkenyl, alkynyl, and cycloalkyl as used herein, refer to compounds having from up to 10 carbon atoms, in particular up to 6 carbon atoms. The lowest number of carbon atoms is between 1 and 3 depending on the structure of the substituent.

In one embodiment, the urease inhibitor is N-(n-butyl) thiophosphoric triamide (nBTPT). nBTPT is sold as the most effective known urease inhibitor and has the following chemical formula II 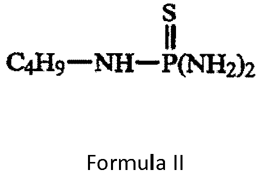 It should be understood that the term nBTPT, as used throughout this specification, refers not only to N-(n-butyl) thiophosphoric triamide in its pure form, but also to industrial grades of this compound which may contain up to 50 weight% impurities, depending on the method of synthesis and purification scheme(s), if any, employed in the production of the nBTPT.

In one embodiment, the urease inhibitor, in particular N-(n-butyl) thiophosphoric triamide (nBTPT), is present at a level of 0.0001 to 1% weight%, in particular 0.02 to 0.2% weight%, more in particular 0.03 to 0.06 weight%, relative to the total weight of the urea-based composition. In order to be effective, the urease inhibitor of the type phosphoric triamide, in particular N-(n-butyl) thiophosphoric triamide (nBTPT) is present in the urea ammonium sulphate-based composition at a level of 0.0001 to 1% weight%, in particular 0.02 to 0.2% weight%, more in particular 0.03 to 0.06 weight%, relative to the total weight of the urea ammonium sulphate-based composition.

In one embodiment, the weight ratio of urease inhibitor of the type phosphoric triamide to magnesium sulphate ranges from 1:100 to 1:1, in particular from 1:50 to 1:1, more in particular from 1:20 to 1:1. An exemplary weight ratio is 1:17.

According to one embodiment, the urease inhibitor can be a liquid at room temperature, a liquid at elevated temperature, or a solid which is dissolved (solution) or suspended (suspension) into a liquid carrier, all of which are different liquid forms of the urease inhibitor of the type phosphoric triamide, in particular N-(n-butyl) thiophosphoric triamide (nBTPT).

In embodiments where the urease inhibitor of the type phosphoric triamide, in particular N-(n-butyl) thiophosphoric triamide (nBTPT), is used as a liquid, it may be used as a 0.1 to 75 weight% solution, in particular as a 15 to 30 weight% solution, relative to the total weight of the solution. Commercial solutions are available, for example as Agrotain® Ultra (Koch, US), N Yield™ (Eco Agro, The Netherlands), Rhodia Ag-Rho™ N Protect B (Solvay, Germany), Iper N-Protect Liquid (Van Iperen, The Netherlands) and BASF Limus (BASF, Germany).

In embodiments where the urease inhibitor nBTPT is used as a liquid, dissolved into a carrier, it can be used as a powder, dissolved in propylene glycol, for example as 17.5 weight% of nBTPT. It is available from Yara International ASA (Norway) as Amiplus® liquid.

Experiments showed that, in compositions according to the invention, less urease inhibitor of the type phosphoric triamide, in particular N-(n-butyl) thiophosphoric triamide (nBTPT) needs to be used than is commonly employed in the prior art. For example, according to the invention, an amount of 0.05 weight% may be used, while for the use of Agrotain® Ultra, an amount of 0.09 weight% is recommended. This finding can at least partly be attributed to the fact that in the compositions according to the invention, the urease inhibitor of the type phosphoric triamide, in particular N-(n-butyl) thiophosphoric triamide (nBTPT) is stabilized, while in the prior art, an overdose is needed to compensate for the degradation of the urease inhibitor and to increase shelf-live thereof. This finding also ensures that less urease inhibitor of the type phosphoric triamide, in particular N-(n-butyl) thiophosphoric triamide (nBTPT) is introduced into the environment.

In embodiments where the urease inhibitor is used in its solid form, it is used as a powder, in particular with a purity of 99 weight% or more. It is available, for example, from Sunfit Chemical Co. (China).

The urease inhibitor of the type phosphoric triamide, in particular N-(n-butyl) thiophosphoric triamide (nBTPT) can also be applied to the urea-based composition by hot melt mixing, as described in US 5,352,265 (Weston et al., 1994), which discloses that nBTPT is incorporated into the homogeneous granular fertilizer composition by blending a concentrated solution of nBTPT in a solvent selected from the group of liquid amides, 2-pyrrolidone, and N-alkyl 2-pyrrolidones, directly into the molten urea prior to its granulation.

### Magnesium sulphate

In one embodiment, the magnesium sulfate in the urea-based composition is present in the composition at a level of 0.001 to 5.0 weight%, in particular 0.02 to 3.0 weight%, more in particular 0.05 to 2.0 weight%, even more in particular 0.1 to 1.0 weight% relative to the total weight of the composition.

Magnesium sulphate is an inorganic salt with the chemical formula MgSO₄.x(H₂O) where 0≤x≤7. It is solid at room temperature and is available in powder form with various average particle sizes (d₅₀), such as between 5 and 1000 µm. A variety of hydrates is known. The heptahydrate MgSO₄.7(H₂O) (epsomite) can be prepared by neutralizing sulfuric acid with magnesium carbonate or oxide, but it is usually obtained directly from natural sources. The heptahydrate readily loses one equivalent of water to form the hexahydrate. The monohydrate, MgSO₄·H₂O is found as the mineral kieserite. It can be prepared by heating the hexahydrate to approximately 150 °C. Further heating to approximately 200 °C gives anhydrous magnesium sulphate.

In one embodiment of the present invention, the magnesium sulphate is selected from the group of anhydrous, mono-, di-, tri-, tetra-, penta-, hexa-, heptahydrate, and mixtures thereof. In one embodiment, the magnesium sulfate is a magnesium sulfate hydrate, in particular, magnesium sulfate heptahydrate (MgSO₄·7H₂O). It was observed that the source of magnesium sulfate did not have a significant effect on the stability of the urease inhibitor. The hydrate compounds are generally cheaper than the anhydrous powder and have a longer shelf-life.

According to a particular embodiment of the present invention, the magnesium sulphate has a purity of > 70 %, in particular > 80 %, more in particular > 90 %, even more in particular > 99 %.

### Urea

The solid, particulate, urea-based composition may comprise from about 40 to 99 weight% of urea.

In one embodiment, to serve as a fertilizer, the average particle size (dp50) of the urea in particulate form is between 1.0 mm and 5 cm, in particular between 1.0 mm and 1 cm, more in particular between 1.0 and 6.0 mm, even more in particular between 2.0 and 4.0 mm, even more in particular between 3.0 and 5.0 mm, and even more in particular between 2.5 and 3.6 mm, as determined by mesh sieve screening.

The urea may be particulated by any commonly used technology, like for instance: granulation, prilling, pelleting, rotoforming, etc..

The composition may comprise other fertilizer elements: primary elements, such as potassium and phosphorous, secondary elements, such as sulfur, which may be in the form of elemental sulfur or a sulfate salt, magnesium and calcium, and micronutrients, such as boron, copper, iron, manganese, molybdenum and zinc. The composition may also comprise other source of nitrogen, such as ammonium or nitrate salts. The composition may be with these nutrients or be treated in any other way.

In one embodiment, the composition comprises at least one compound selected from the list of ammonium nitrate, calcium nitrate, calcium ammonium nitrate, sodium nitrate, ammonium sulphate nitrate, potassium ammonium nitrate, ammonium phosphate, such as mono-ammonium phosphate (MAP) and di-ammonium phosphate (DAP), calcium bis(dihydrogen)-orthophosphate, super phosphate, triple superphosphate, rock phosphate, potassium sulphate, potassium magnesium sulphate, ammonium sulphate (AS), potassium chloride (MOP), magnesium nitrate, and mixtures thereof.

It may contain any other processing additive, such as granulation additive, typically a ureaformaldehyde condensate, etc..

### Anti-caking and/or moisture repellent and/or anti-dust coating

In one embodiment, the composition comprises an anti-caking and/or moisture repellent and/or anti-dust coating, wherein the coating material is able to increase the moisture repellence of the urea-based composition. Furthermore, the coating may also be able to reduce dust formation.

In one embodiment, the coating material is a non-polar material, in particular a liquid organic material, such as an oil, wax, resin or the like and any mixture thereof. The coating material is present in the composition at a level of 0.0001 to 1 weight%, in particular 0.02 to 0.5 weight%, more in particular 0.1 to 0.2 weight%, relative to the total weight of the composition.

Examples of suitable anticaking and/or moisture-repellent coatings are vegetable oil (e.g. rapeseed or neem), paraffin and Novoflow anti-caking and/or moisture repellence agents (Novochem Fertilizer Additives, The Netherlands).

In one embodiment, the moisture-repellent coating is a coating such as disclosed in EP 0768993 (Norsk Hydro ASA), for a nitrogen-containing fertilizer, comprising at least a wax, an oil and a resin which is oil-soluble and miscible with wax (Tropicote®).

In one embodiment, the coating can be a formaldehyde-based or urea formaldehyde-based coating.

In one embodiment, the composition comprises 40 to 99 weight% of urea, 0 to 60 weight% of at least one compound selected from the list of ammonium nitrate, calcium nitrate, calcium ammonium nitrate, sodium nitrate, ammonium sulphate nitrate, potassium ammonium nitrate, ammonium phosphate, such as mono-ammonium phosphate (MAP) and di-ammonium phosphate (DAP), calcium bis(dihydrogen)-orthophosphate, super phosphate, triple superphosphate, rock phosphate, potassium sulphate, potassium magnesium sulphate, ammonium sulphate (AS), potassium chloride (MOP), magnesium nitrate, and mixtures thereof, 0.0001 to 1.0 weight% of a urease inhibitor of the type phosphoric triamide, 0.0001 to 5.0 weight% of a magnesium sulfate, in particular magnesium sulfate heptahydrate, 0 to 1.0 weight% of an anti-caking and/or moisture repellent and/or anti-dust coating, adding up to 100 weight%, being the total weight of the composition.

In another aspect, the use of the solid, particulate, homogeneous urea-based composition as a fertilizer, in particular for supporting the growth of agricultural products on sulfur - deficient soil, is disclosed. Sulfur-deficient soils are a growing problem: since sulfur is a component of numerous protein enzymes that regulate photosynthesis and nitrogen fixation, when sulfur is limiting, there is less chlorophyll production, which makes the younger leaves of the plant appear yellow, a symptom sometimes confused with N-deficiency.

In another aspect, the use of the solid, particulate, homogeneous urea-based composition as an animal feed is disclosed. It is well known in the field of agriculture that urea-based compositions may be fed to animals as a supplementary source of nitrogen. The urea-based composition may be given as such to the animals, or mixed with other food sources, such as forage or other mineral feed sources.

In another aspect, a method for the manufacture of a solid, particulate, urea-based composition is disclosed. The method comprises the steps of: providing a urea-based melt, adding to the melt, a urease inhibitor of the type phosphoric triamide in solid particulate or liquid form, in particular wherein the urease inhibitor is N-(n-butyl) thiophosphoric triamide (nBTPT), and a magnesium sulfate, mixing the melt comprising urea, the inhibitor and the magnesium sulfate to obtain an homogeneous melt, particulating the melt to obtain a solid, particulate, homogeneous urea-based composition, optionally, applying a coating to the urea-based composition, wherein the coating is able to increase at least the anticaking and/or water repellence and/or anti-dust properties of the urea-based composition.

A urea melt is a mixture comprising urea, in particular at least 80% urea, and water. Urea has a melting point of 133 °C, so a mixture comprising urea and water has a melting point below 130 °C.

It was found that the order of addition of the components magnesium sulphate and the urease inhibitor of the type phosphoric triamide, in the urea melt had little effect on the performance of the claimed effects. In one embodiment, the magnesium sulfate is added before the urea inhibitor. It may be an advantage to introduce the stabilizer of the inhibitor in the melt before the inhibitor to ensure that the stabilizer can slow down the decomposition of the inhibitor as soon as the inhibitor is introduced in the melt.

Since the melt already contains water, it is not necessary to use anhydrous components, such as anhydrous magnesium sulfate. The cheaper magnesium sulfate hydrate may be used without affecting the quality of the final particulate products or the stability of the urease inhibitor.

To particulate a urea-based melt and obtain solid particles, a number of methods are well known in the art, for example prilling and granulating. The water-content of the melt needs to be adjusted depending on the particulating method chosen. So the melt may be heated up after addition of the urease inhibitor and the magnesium sulfate to reach the desired water content.

In another aspect, a method for improving the stability of a urease inhibitor of the type phosphoric triamide, in particular N-(n-butyl) thiophosphoric triamide, (nBTPT) in a solid, particulate, homogeneous urea-based composition comprising urea and a urease inhibitor of the type phosphoric triamide is disclosed. The method comprises the step of adding a magnesium sulfate to the urea-based composition.

### Further effects

It was also observed that, under bagged conditions without the presence of a head space, i.e. with the substantial exclusion of moisture, atmospheric gasses such as oxygen, nitrogen, etc., the stability of the urease inhibitor of the type phosphoric triamide, in particular N-(n-butyl) thiophosphoric triamide (nBTPT) in the composition according to the invention, was further increased. Hence, the invention is in particular directed to a packaged, in particular bagged, urea-based composition comprising urea in particulate form. As used in this application, "bagged" means that the product is packaged such that it is in essence not in contact with moisture and atmospheric gasses during the period it is packaged. Hence, the package may be a bag, big bag, container, box, etc., being in principle all packaging without the substantial presence of a head space, filled with an atmosphere, such as air. As used in this application, "bagged" further means that the product is packaged in manageable unit amounts, such as 5 kg, 10 kg, 15 kg, 20 kg, 25 kg, 50 kg, or more, and usually packaged using a plastic material, in particular a foil, from such materials as paper, cardboard, polyethylene, polyvinyl and polycarbonate.

One embodiment refers to a container or package comprising the urea-based composition as disclosed herein, wherein the head space in said container or package is less than about 1%.

In the context of the present invention, the term "headspace" refers to the volume left at the top of the almost filled container before or after sealing.

In the context of the present invention, the term "about", when associated with the headspace, means +/- 0.1%. For example, "about 1%" means that 1.1%, 1.05%, 0.95% or 0.9% are also encompassed.

In one embodiment, the container as described herein comprises a headspace of less than 1%, in particular less than 0.75%, more in particular less than 0.5%, even more in particular less than 0.25% and even more in particular no head-space, based on the total volume of said container.

### Examples

The following examples are included to demonstrate certain embodiments of the invention. It should be appreciated by the skilled person that the techniques disclosed in the examples represent techniques discovered by the inventors to function well in the practice of the invention. The skilled person should, however, in light of the present invention, appreciate that many changes can be made in the specific embodiments that are dis-closed and still obtain a like or similar result without departing from the spirit and scope of the invention, therefore all matter set forth is to be interpreted as illustrative and not in a limiting sense.

Example 1: Fertilizer particles were produced in the urea pilot plant in Sluiskil (Yara International ASA). This pilot plant has a batch capacity - after sieving - of about 50 kg of on-spec product. It basically consists of a stirred urea preparation vessel with an active volume of about 150 litres and a fluidized bed granulator of the UFT-type, equipped with a spraying nozzle of the spiral-type or HFT-type (EP 1701798 B1, 2005, Yara International ASA). A urea melt was prepared and the urease inhibitor nBTPT, used as a powder or liquid formulations, and the magnesium sulfate, if applicable, were added to the urea melt, which was subsequently granulated in the fluidized bed granulator. Two products were compared: urea granules comprising 0.06 weight% of nBTPT without any magnesium sulfate, and urea granules comprising 0.06 weight% of nBTPT and 1.0 weight% of magnesium sulfate heptahydrate. The amount of nBTPT in the granules at the beginning and at the end of the experiments was measured by HPLC according to procedure CEN 15688-2007.

Solid N-(n-butyl)thiophosphoric triamide was obtained from Sunfit Chemical Co. (China) (CAS-Nr. 94317-64-3), as a white crystalline solid with a melting point of 58-60 °C. Magnesium sulfate heptahydrate (CAS-Nr 10034-99-8) was obtained from Merck. The products were kept for 110 weeks at room temperature in bags.

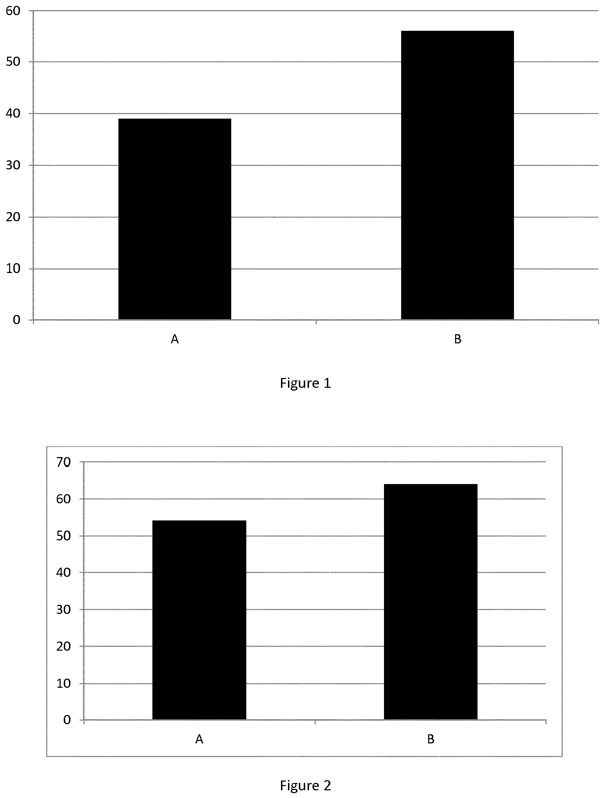

Figure 1 shows the amount (in percentage) of nBTPT recovered after 26 weeks of storage at room temperature of the two products: **A** contains urea and nBTPT; **B** contains urea, nBTPT and MgSO₄. The products comprising nBTPT and MgSO₄ shows a much higher degree of recovery compared to the products containing only nBTPT (56% of nBTPT recovered compared to 39%). And no significant smells of ammonia was noted during the storage.

Figure 2 shows the amount (in percentage) of nBTPT recovered after 25 days of storage at 70 °C for 25 days of the same products. The products comprising nBTPT and MgSO₄ shows a higher degree of recovery compared to the products containing only nBTPT (64% of nBTPT recovered compared to 54%).

## Claims

1. A solid, particulate, homogeneous urea-based composition comprising urea, a urease inhibitor of the type phosphoric triamide, **characterized in that** the composition comprises a magnesium sulfate.

2. The urea-based composition according to claim 1, **characterized in that** the average particle size (dp50) of the composition is between 1.0 mm and 5 cm, as determined by mesh sieve screening.

3. The urea-based composition according to any one of claims 1 to 2, **characterized in that** the urease inhibitor of the type phosphoric tri-amide is a compound of formula: 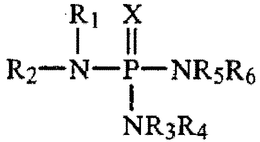 wherein:
- X is oxygen or sulphur;
- R₁ is alkyl, cycloalkenyl, aralkyl, aryl, alkenyl, alkynyl, or cycloalkyl;
- R₂ is hydrogen, alkyl, cycloalkenyl, aralkyl, aryl, alkenyl, alkynyl, or cycloalkyl ; or R₁ and R₂ together may form an alkylene or alkenylene chain which may optionally include one or more heteroatoms of diva-lent oxygen, nitrogen or sulphur completing a 4, 5, 6, 7, or 8 membered ring system; and
- R₃, R₄, R₅ and R₆ are individually hydrogen or alkyl having 1 to 6 carbon atoms;
particularly wherein the urease inhibitor of the type phosphoric tri-amide is N-(n-butyl) thiophosphoric triamide (nBTPT).

4. The urea-based composition according to any one of claims 1 to 3, wherein the urease inhibitor, in particular N-(n-butyl) thiophosphoric triamide (nBTPT), is present at a level of 0.0001 to 1 weight%, in particular 0.02 to 0.2 weight%, more in particular 0.03 to 0.06 weight%, relative to the total weight of the urea-based composition.

5. The urea-based composition according to any one of claims 1 to 4, wherein the magnesium sulfate is a magnesium sulfate hydrate, in particular magnesium sulfate heptahydrate, MgSO₄·7H₂O.

6. The urea-based composition according to any one of claims 1 to 5, wherein the magnesium sulfate is present in the composition at a level of 0.001 to 5.0 weight%, in particular 0.02 to 3.0 weight%, more in particular 0.05 to 2.0 weight%, even more in particular 0.1 to 1.0 weight% relative to the total weight of the composition.

7. The urea-based composition according to any one of claims 1 to 6, wherein the weight ratio of urease inhibitor of the type phosphoric triamide to the magnesium sulfate ranges from 1:100 to 1:1, in particular from 1:50 to 1:1, more in particular from 1:20 to 1:1.

8. The urea-based composition according to any one of claims 1 to 7, wherein the composition comprises an anti-caking and/or moisture repellent and/or anti-dust coating; in particular wherein the coating comprises at least a non-polar material, in particular a liquid organic material, such as an oil, wax, resin or the like and any mixture thereof and is present in the composition at a level of 0.0001 to 1.0 weight%, in particular 0.02 to 0.5 weight%, more in particular 0.1 to 0.2 weight%, relative to the total weight of the composition.

9. The urea-based composition according to any one of claims 1 to 8, wherein the urea-based composition is packaged without the presence of a head space.

10. The urea-based composition according to any one of claims 1 to 9, wherein the urea-based composition comprises at least one compound selected from the list of ammonium nitrate, calcium nitrate, calcium ammonium nitrate, sodium nitrate, ammonium sulphate nitrate, potassium ammonium nitrate, ammonium phosphate, such as mono-ammonium phosphate (MAP) and di-ammonium phosphate (DAP), calcium bis(dihydrogen)-orthophosphate, super phosphate, triple superphosphate, rock phosphate, potassium sulphate, potassium magnesium sulphate, ammonium sulphate (AS), potassium chloride (MOP), magnesium nitrate, and mixtures thereof.

11. The urea-based composition according to any one of claims 1 to 10, wherein the urea-based composition comprises from 40 to 99 weight% of urea.

12. The urea-based composition according to any one of claims 1 to 11, wherein the composition comprises:
- 40 to 99 weight% of urea;
- 0 to 60 weight% of one or more compounds selected from the group as defined in claim 10;
- 0.0001 to 1.0 weight% of a urease inhibitor of the type phosphoric triamide;
- 0.0001 to 5.0 weight% of a magnesium sulfate;
- 0 to 1.0 weight% of an anti-caking and/or moisture repellent and/or anti-dust coating;
adding up to 100 weight%, being the total weight of the composition.

13. Use of the solid, particulate urea-based composition as claimed in anyone of claims 1 to 12 as a fertilizer.

14. A method for the manufacture of a solid, particulate, urea-based composition as defined in any one of claims 1 to 12, the method comprising the steps of:
1) providing a urea-based melt;
2) adding to the melt provided in step 1) a urease inhibitor of the type phosphoric triamide in solid particulate or liquid form, in particular wherein the urease inhibitor is N-(n-butyl) thiophosphoric triamide (nBTPT), and a magnesium sulfate ;
3) mixing the melt obtained in step 2) to obtain an homogeneous melt;
4) particulating the melt by a suitable method to obtain a solid homogeneous urea-based composition;
5) optionally, applying a coating to the urea-based composition obtained in step 4), wherein the coating is able to increase at least the anticaking and/or water repellence and/or anti-dust properties of said urea-based composition.

15. A method for improving the stability of a urease inhibitor of the type phosphoric triamide, in particular N-(n-butyl) thiophosphoric triamide, (nBTPT) in a solid, particulate, homogeneous urea-based composition comprising urea, a urease inhibitor of the type phosphoric triamide by the addition to the urea-based composition of a magnesium sulfate.
